# EUROPEAN PATENT SPECIFICATION

(11) **EP 1 881 043 B1**
(45) Date of publication and mention of the grant of the patent: **05.12.2012**
(21) Application number: 06015147.9
(22) Date of filing: 20.07.2006
(51) Int. Cl.: C09D 11/02

(54) **Ink and printed matter**
Tinte und bedrucktes Material
Encre et matière imprimée

(43) Date of publication of application: 23.01.2008
(73) Proprietor: TEIKOKU PRINTING INKS MFG. CO., LTD, Tokyo 108-0073 (JP)
(72) Inventor: Takada, Naoto c/o Teikoku Printing Inks Mfg.Co.Ltd, Tokyo 116-0011 (JP)
(74) Representative: von Füner, Nicolai

(56) References cited:
- JP-A- 10 158 561
- JP-A- 2003 246 956
- US-A1- 2004 103 816
- US-A1- 2006 014 854

## Description

The present invention relates to printed matter having high specular gloss, inks to be used for producing the printed matter, and printed matter using the inks.

It is well known that metallic inks can be prepared by addition of aluminum foils to printing inks. Printed matter printed with a metallic ink, however, generates glittering parts in fine regions, resulting in insufficient specular gloss.

To solve such a problem, the applicant of the invention has proposed inks having the following composition in Japanese Patent Application No. H08-331465:
(1) An ink including 100 parts by weight of an aluminum foil, 15 to 200 parts by weight of a binder polymer, and 600 to 3000 parts by weight of a solvent, wherein the aluminum foil contains aluminum foils with thicknesses of 0.5 µm or less and foil surface areas of 20 µm² to 2000 µm² in an amount of 75% or more; and
(2) An ink including 100 parts by weight of an aluminum foil, 15 to 2000 parts by weight of a binder polymer, and 600 to 3000 parts by weight of a solvent, wherein the aluminum foil contains aluminum foils with thicknesses of 0.3 µm or less and foil surface areas of 20 µm² to 2000 µm² in an amount of 75% or more:
   and, in the above compositions, the viscosity of the inks is preferred in the range of 50 to 1000 mPa ·s (cps) (measured at 20°C with a BM-type rotational viscometer). Such compositions and viscosity range are disclosed in Japanese Unexamined Patent Publication No. H10-158561 (Patent Document 1) and Patent No. 3151606.

The above-mentioned prior invention (hereinafter, referred to as the "applicant's prior invention") can provide significantly high specular gloss as well as, within a preferred viscosity range, prevent sagging in terms of keeping contours of printed regions, and also realize highly qualified specular prints.

Further improvements are, however, expected with the applicant's prior invention in regard to enhancement of the specular gloss by further selecting a thickness of aluminum foils, and to prevent sagging by further defining the lower limit value of the viscosity for keeping not only contours in printed images but also clearances between thin lines (specifically, a clearance of 0.15mm).

On the other hand, Japanese Examined Patent Publication No. S62-45905 (Patent Document 2) discloses inks which contain aluminum foils with thicknesses of 0.035 to 0.045 µm and foil surface areas of 20 µm² to 2000 µm² in an amount of 90% (Example 8), and are composed of 100 parts by weight of the aluminum foils, 20 parts by weight of a binder polymer of nitrocellulose (Example 9), and 2770 parts by weight of a solvent selected from ethylcellosolve, MEK, methylcellosolve, and toluene (Examples 6, 8, and 9).

However, if the ink composition disclosed in the above-described Japanese Examined Patent Publication is applied, test results obtained by the inventors of the present invention according to such compositions have shown that the ink obtained had a viscosity of 17 mPa · s (cps) or less (measured at 20°C with a BM-type rotational viscometer) by causing significant sagging. With regard to this point, improvements are necessary to solve this problem.

The present invention intends to provide an ink and a printed matter using the ink; the ink will be improved in its specular gloss by further selecting a thickness of the aluminum foils which were applied in the applicant's prior invention as well as, with a basic composition based on the above improvement, be able to prevent sagging in terms of keeping a clearance on a thin outline with a width of 0.15mm by adequately selecting the lower limit value of the ink viscosity.

The present invention is, to solve the above-mentioned problems, a printing ink which comprises 100 parts by weight of an aluminum foil, 55 parts by weight of a polyurethane resin as a binder polymer, 14 parts by weight of a cellulose derivative resin as a binder polymer, and solvents including 1400 parts by weight of 3-methoxy-3-methyl-1-butanol and 100 parts by weight of cyclohexanone, wherein the aluminum foil contains aluminum foils with thicknesses of 0.03 µm and foil surface areas of 1.5 µm² to 1500 µm² in an amount of 80% or more based on an accumulated foil surface area, and having a viscosity of 1000 mPa · s (cps) (measured at 20°C with a BM-type rotational viscometer) or a printing ink which comprises 100 parts by weight of an aluminum foil, 80 parts by weight of a polyurethane resin as a binder polymer, 20 parts by weight of a polyester resin as a binder polymer, and solvents including 1700 parts by weight of 3-methoxy-3-methyl-1-butanol and 100 parts by weight of propyleneglycol monomethylether, wherein the aluminum foil contains aluminum foils with thicknesses of 0.02 µm and foil surface areas of 1.5 µm² to 1500 µm² in an amount of 80% or more based on an accumulated foil surface area, and having a viscosity of 3000 mPa · s (cps) (measured at 20°C with a BM-type rotational viscometer).

The invention can provide an ink and a printed matter applied with the ink for a printed matter being viewed as a front face opposite the printed face thereof; the ink being provided by conducting a selection within the applicant's prior invention to exhibit highly enhanced specular gloss without causing sagging in terms of keeping contours of printed images, and by preventing sagging in terms of keeping a clearance on a thin outline with a width of 0.15mm by defining a further lower viscosity limit value as mentioned in the above preferred viscosity range.

The invention requires that the aluminum foil includes aluminum foils with thicknesses of 0.03 µm or 0.02 µm and foil surface areas of 1.5 µm² to 1500 µm² with occupation of 80% or more based on an accumulated foil surface area; however, when the foils have a thickness of 0.03 µm or less, their surface area mostly falls within the area range mentioned above.

Therefore, when the foils have a thickness of 0.03 µm, the above-mentioned requirement of 80% or more based on an accumulated foil surface area is substantially identical to the requirement that the aluminum foils have thicknesses of 0.03 µm or less; on the contrary, when the foils have a thickness of 0.02 µm or less, the above-mentioned requirement of 80% or more corresponds to both requirements of the thickness and foil surface area.

With regard to the foil area range, when the volume of the aluminum foils with surface areas of 1.5 µm² or less becomes large, it is difficult to obtain high specular gloss; on the other hand, when the volume of the aluminum foils with surface areas of 1500 µm² or more becomes large, it tends to generate printing streaks or unevenness.

When an ink is composed of 100 parts by weight of an aluminum foil containing aluminum foils having the above-mentioned thickness range and foil surface area range in an amount of 80% or more, with 3 to 200 parts by weight of a resin which is a binder and 600 to 2500 parts by weight of a solvent, the ink can be further up-graded in its specular gloss level than that of the applicant's prior invention.

In the invention, the viscosity is required to be 1000 or 3000 mPa · s (cps) (measured at 20°C with a BM-type rotational viscometer).

The requirement of the lower value, i.e. 1000 mPa · s (cps), is required to keep a clearance on a thin outline with a width of 0.15mm.

The upper value, i.e. 3000 mPa · s (cps), represents a limit value to print without causing printing unevenness for any kind of printing method such as gravure printing, screen printing, and flexographic printing; such a limit value is derived from experimental data obtained by the inventors under trial and error.

In the ink of the invention, 55 parts by weight of a polyurethane resin and 14 parts by weight of a cellulose derivative resin or 80 parts by weight of a polyurethane resin and 20 parts by weight of a polyester resin is used to 100 parts by weight of the aluminum foil. When the volume of the binder polymer is less than 3 parts by weight, printability of the ink is reduced and durability of an ink layer printed is significantly deteriorated. When the volume of the binder polymer is 200 parts by weight or more, a decrease in specular gloss of a printed matter is observed.

Polymers applicable as binders for printing inks can be polyester resins, polyurethane resins, and cellulose derivative resins.

Solvents to be used are those dissolving the binder polymers mentioned above or diluting such dissolved solution; selectable are the ketones cyclohexanone, the alcohol 3-methyl-3-methoxy-1-butanol, and the polyhydric alcohol propyleneglycol monomethylether.

Especially, 3-methyl-3-methoxy-1-butanol is usually often used because it is often contained in an aluminum foil slurry of pre-manufactured commercial products, does not have any specific toxicities, and hardly dissolves a printing surface of a printing substrate.

The amount of solvents and diluents used is 1400 parts by weight of 3-methoxy-3-methyl-1-butanol and 100 parts by weight of cyclohexanone or 1700 parts by weight of 3-methoxy-3-methyl-1-butanol and 100 Parts by weight of propyleneglycol monomethylether to 100 parts by weight of the aluminum foil. When being 600 parts by weight or less, reduction of specular gloss of a printed matter is observed; and when being 2500 parts by weight or more, printability of the ink is deteriorated.

Although an upper limit of the relative volume of the solvent in the applicant's prior invention is 3000 parts by weight, the inventors have altered the value of 3000 parts by weight, in the upper limit value of the applicant's prior invention, to 2500 parts by weight since the above-mentioned printability of the ink of this invention is slightly reduced in the range of 2500 to 3000 parts by weight.

In the ink of the invention, transparent or semi-transparent colored pigments or extender pigments, pearl pigments, and other metal powders are also allowed to be added to change a color tone of specular gloss of a printed matter. Also, when needed, leveling agents and defoaming agents normally used for typical inks are also permitted to be added to the ink.

Examples and Comparative Examples of the invention are explained as follows.

### (Example 1)

An ink was produced by adding 100 parts by weight of an aluminum foil containing aluminum foils with a thickness of 0.03 µm and foil surface areas of 1.5 µm² to 1500 µm² in an amount of 80% or more, with binders including 55 parts by weight of a polyurethane resin and 14 parts by weight of a cellulose derivative resin, and solvents including 1400 parts by weight of 3-methoxy-3-methyl-1-butanol and 100 parts by weight of cyclohexanone. The viscosity of the ink was 1000 mPa · s (cps).

The ink produced was printed on a back face of a transparent polyester film by screen printing, and a luminance of the printed film was determined (by "Luminance Meter DM-7" commercially available from TOPCON CORPORATION), resulting in 4.44 Cd/cm² , and significantly high specular gloss was visually observed.

The printed image maintained clear contours as well as clearances on the thin outline with a width of 0.15mm, and sagging generations were prevented in both cases.

### (Example 2)

An ink was produced by adding 100 parts by weight of an aluminum foil containing aluminum foils with a thickness of 0.02 µm and foil surface areas of 1.5 µm² to 1500 µm² in an amount of 80% or more, with binders including 80 parts by weight of a polyurethane resin and 20 parts by weight of a polyester resin, and solvents including 1700 parts by weight of 3-methoxy-3-methyl-1-butanol and 100 parts by weight of propyleneglycol monomethylether. The viscosity of the ink was 3000 mPa · s (cps).

The ink produced was printed on a back face of a transparent polyester film by screen printing, and a luminance of the printed film was determined (by "Luminance Meter DM-7" commercially available from TOPCON CORPORATION), resulting in 5.32 Cd/cm², and significantly high specular gloss was visually observed.

The printed image maintained clear contours as well as clearances on the thin outline with a width of 0.15mm, and sagging generations were prevented in both cases.

### (Comparative Example 1)

According to the applicant's prior invention, an ink was produced by adding 100 parts by weight of an aluminum foil containing aluminum foils with a thickness of 0.1 µm and foil surface areas of 1.5 µm² to 1500 µm² in an amount of 80% or more, with binders including 30 parts by weight of a polyester resin and 15 parts by weight of a cellulose derivative resin, and solvents including 600 parts by weight of cyclohexanone and 500 parts by weight of propyleneglycol monomethylether. The viscosity of the ink was 700 mPa · s (cps).

The ink produced was printed on a back face of a transparent polyester film by screen printing, and a luminance of the printed film was determined (by "Luminance Meter DM-7" commercially available from TOPCON CORPORATION), resulting in 2.19 Cd/cm². This result was worse in luminance than that of Examples 1 and 2, and the specular gloss obtained was not as high as that of the Examples.

The printed image maintained clear contours but failed to completely keeping clearances on the thin outline with a width of 0.15mm, and sagging was little generated.

### (Comparative Example 2)

An ink similar to an ink disclosed in Patent Document 2 was produced by adding 100 parts by weight of an aluminum foil containing aluminum foils with a thickness of 0.03 µm and foil surface areas of 1.5 µm² to 1500 µm² in an amount of 80% or more, with a binder of 20 parts by weight of a nitrocellulose resin, and solvents including 1420 parts by weight of ethylcellosolve, 900 parts by weight of 3-methoxy-3-methyl-1-butanol, and 450 parts by weight of methyl ethyl ketone. The viscosity of the ink was 17 mPa · s (cps).

The ink produced was printed on a back face of a transparent polyester film by screen printing, and a luminance of the printed film was determined (by "Luminance Meter DM-7" commercially available from TOPCON CORPORATION), resulting in 5.25 Cd/cm². A specular gloss as high as that of Example 2 was obtained.

However, the printed image was unable to maintain clear contours, and completely impossible to maintain clearances on the thin outline with a width of 0.15mm, and sagging generations were found in both cases.

### (Comparative Example 3)

An ink was produced by adding 100 parts by weight of an aluminum foil containing aluminum foils with a thickness of 0.1 µm and foil surface areas of 1.5 µm² to 1500 µm² in an amount of 80% or more, with binders including 15 parts by weight of an acrylic resin and 15 parts by weight of a cellulose derivative resin, and solvents including 1500 parts by weight of 3-methoxy-3-methyl-1-butanol, 600 parts by weight of methyl ethyl ketone, and 300 parts by weight of cyclohexanone. The viscosity of the ink was 25 mPa · s (cps).

The ink produced was printed on a back face of a transparent polyester film by screen printing, and a luminance of the printed film was determined (by "Luminance Meter DM-7" commercially available from TOPCON CORPORATION), resulting in 2.10 Cd/cm². This result was worse in luminance than that of Examples 1 and 2, and the specular gloss obtained was not as high as that of the Examples.

Moreover, the printed image was unable to maintain clear contours, and completely impossible to maintain clearances on the thin outline with a width of 0.15mm, and sagging generations were found in both cases.

The ink of the invention is used for printing on a back face where an opposite face of the face printed is viewed as a front face, thereby being utilized to obtain a printed matter having high specular gloss and fine printing images.

## Claims

1. A printing ink comprising 100 parts by weight of an aluminum foil, 55 parts by weight of a polyurethane resin as a binder polymer, 14 parts by weight of a cellulose derivative resin as a binder polymer, and solvents including 1400 parts by weight of 3-methoxy-3-methyl-1-butanol and 100 parts by weight of cyclohexanone, wherein the aluminum foil contains aluminum foils with thicknesses of 0.03 µm and foil surface areas of 1.5 µm² to 1500 µm² in an amount of 80% or more based on an accumulated foil surface area, and having a viscosity of 1000 mPa · s (cps) (measured at 20°C with a BM-type rotational viscometer) to keep a clearance on a thin outline with a width of 0.15mm and prevent sagging generations, or a printing ink comprising 100 parts by weight of an aluminum foil, 80 parts by weight of a polyurethane resin as a binder polymer, 20 parts by weight of a polyester resin as a binder polymer, and solvents including 1700 parts by weight of 3-methoxy-3-methyl-1-butanol and 100 parts by weight of propyleneglycol monomethylether, wherein the aluminum foil contains aluminum foils with thicknesses of 0.02 µm and foil surface areas of 1.5 µm² to 1500 µm² in an amount of 80% or more based on an accumulated foil surface area, and having a viscosity of 3000 mPa · s (cps) (measured at 20°C with a BM-type rotational viscometer) to keep a clearance on a thin outline with a width of 0.15mm and prevent sagging generations.

2. The printing ink according to Claim 1, the ink being applied to screen printing, gravure printing, and flexographic printing.

3. A printed matter printed on a surface of a transparent substrate with the ink according to any one of Claims 1 and 2 and viewed as a front face opposite the printed face thereof.

## Patentansprüche

1. Druckfarbe, umfassend 100 Gewichtsteile einer Aluminiumfolie, 55 Gewichtsteile eines Polyurethanharzes als Bindemittel, 14 Gewichtsteile eines Cellulosederivatharzes als Bindemittel und Lösungsmittel, umfassend 1400 Gewichtsteile 3-Methoxy-3-methyl-1-butanol und 100 Gewichtsteile Cyclohexanon, wobei die Aluminiumfolie Aluminiumfolien mit einer Dicke von 0,03 µm und Folienoberflächen von 1,5 µm² bis 1500 µm² in einer Menge von 80 % oder mehr, bezogen auf die gesamte Folienoberfläche, und mit einer Viskosität von 1000 mPa · s (cps), gemessen bei 20 °C mit einem Rotationsviskosimeter vom BM-Typ, zur Aufrechterhaltung eines Zwischenraums an einer dünnen Kante (Kontur?) mit einer Breite von 0,15 mm und zur Verhinderung von Durchbiegungen, oder eine Druckfarbe, umfassend 100 Gewichtsteile einer Aluminiumfolie, 80 Gewichtsteile eines Polyurethanharzes als Bindemittel, 20 Gewichtsteile eines Polyesterharzes als Bindemittel und Lösungsmittel, umfassend 1700 Gewichtsteile 3-Methoxy-3-methyl-1-butanol und 100 Gewichtsteile Propylenglycolmonomethylether, wobei die Aluminiumfolie Aluminiumfolien mit einer Dicke von 0,02 µm und Folienoberflächen von 1,5 µm² bis 1500 µm² in einer Menge von 80 % oder mehr, bezogen auf die gesamte Folienoberfläche, und mit einer Viskosität von 3000 mPa · s (cps), gemessen bei 20 °C mit einem Rotationsviskosimeter vom BM-Typ, zur Aufrechterhaltung eines Zwischenraums an einer dünnen Außenlinie mit einer Breite von 0,15 mm und zur Verhinderung von Durchbiegungen.

2. Druckfarbe nach Anspruch 1, wobei diese für Sieb-, Tief- und Flexodruck verwendet wird.

3. Bedruckter Stoff, bedruckt auf einer Oberfläche eines transparenten Substrats mit der Farbe gemäß einem der Ansprüche 1 und 2 und betrachtet als eine der bedruckten Fläche gegenüberliegende Vorderfläche.

## Revendications

1. Encre d'impression comprenant 100 parties en poids d'un feuil d'aluminium, 55 parties en poids d'une résine de polyuréthane comme polymère liant, 14 parties en poids d'une résine dérivée de cellulose comme polymère liant et des solvants incluant 1 400 parties en poids de 3-méthoxy-3-méthyl-1-butanol et 100 parties en poids de cyclohexanone, où le feuil d'aluminium contient des feuils d'aluminium avec des épaisseurs de 0,03 µm et des surfaces de feuil de 1,5 µm² à 1 500 µm² en une quantité de 80 % ou plus sur la base d'une surface cumulée des feuils et ayant une viscosité de 1 000 mPa·s (cps) (mesurée à 20° C à l'aide d'un viscosimètre rotatif de type BM) pour maintenir une clairance sur un contour fin ayant une largeur de 0,15 mm et éviter les productions de dégoulinures, ou encre d'impression comprenant 100 parties en poids d'un feuil d'aluminium, 80 parties en poids d'une résine de polyuréthane comme polymère liant, 20 parties en poids d'une résine de polyester comme polymère liant et des solvants incluant 1 700 parties en poids de 3-méthoxy-3-méthyl-1-butanol et 100 parties en poids de monométhyléther de propylèneglycol, où le feuil d'aluminium contient des feuils d'aluminium avec des épaisseurs de 0,02 µm et des surfaces de feuil de 1,5 µm² à 1 500 µm² en une quantité de 80 % ou plus sur la base d'une surface cumulée des feuils et ayant une viscosité de 3000 mPa·s (cps) (mesurée à 20° C à l'aide d'un viscosimètre rotatif de type BM) pour maintenir une clairance sur un contour fin avec une épaisseur de 0,15 mm et éviter les productions de dégoulinures.

2. Encre d'impression selon la revendication 1, l'encre étant appliquée par sérigraphie, héliogravure et flexographie.

3. Matière imprimée, imprimée sur une surface d'un substrat transparent avec l'encre selon l'une quelconque des revendications 1 et 2 et visualisée comme une face avant opposée à sa face imprimée.
